**Europäisches Patentamt**

(19) **European Patent Office**

**Office européen des brevets**

(11) Publication number : **0 348 008 B1**

(12) **EUROPEAN PATENT SPECIFICATION**

(45) Date of publication of patent specification :
26.08.92 Bulletin 92/35

(51) Int. Cl.⁵ : **B65G 53/22, B65D 88/72**

(21) Application number : **89201646.0**

(22) Date of filing : **21.06.89**

(54) Aeration tube discharge control device.

(30) Priority : **21.06.88 US 209603**
**21.06.88 US 209605**
**21.06.88 US 209604**

(43) Date of publication of application :
**27.12.89 Bulletin 89/52**

(45) Publication of the grant of the patent :
**26.08.92 Bulletin 92/35**

(84) Designated Contracting States :
**DE GB IT NL SE**

(56) References cited :
**DE-A- 2 336 309**
**DE-B- 1 262 900**
**DE-B- 1 268 062**
**FR-A- 1 108 979**
**FR-A- 1 111 716**
**SOVIET INVENTIONS ILLUSTRA- TED, sections P,Q, week 8440, November 14, 1984 DER-WENT PUBLICATIONS LTD., Q35**

(73) Proprietor : **SHELL INTERNATIONALE
RESEARCH MAATSCHAPPIJ B.V.
Carel van Bylandtlaan 30
NL-2596 HR Den Haag (NL)**

(72) Inventor : **Dirkse, Hendricus Arien
Carel van Bylandtlaan 30
NL-2596 HR Den Haag (NL)**
Inventor : **Ploeg, Johannes Everdineus Gerrit
Carel van Bylandtlaan 30
NL-2596 HR Den Haag (NL)**
Inventor : **Rombout, Rene
Carel van Bylandtlaan 30
NL-2596 HR Den Haag (NL)**
Inventor : **Everts, Rudi
Carel van Bylandtlaan 30
NL-2596 HR Den Haag (NL)**
Inventor : **Scott, Andrew Michael
c/o P.O. Box 1
Chester Cheshire CH1 3SH (GB)**
Inventor : **Dewitz, Thomas Sean
Badhuisweg 3
NL-1031 CM Amsterdam (NL)**
Inventor : **Arbore, Charles Michael
5702, Kuldell Street
Houston Texas 77096 (US)**
Inventor : **Mahagaokar, Uday
12246, Villa Lea
Houston Texas 77071 (US)**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to an apparatus for maintaining a uniform mass flow rate of particulate solids and gas mixture discharged from a holding vessel apparatus to a receiving reactor, comprising means for introducing said mixture into a containing means having downwardly converging walls which form at least one port at the apex thereof for discharging said mixture therefrom; an aeration means positioned in said containing means for aerating said particulate solids and means for discharging said particulate solids from said containing means wherein the aeration means comprises:

– first tubing means fixedly secured within said containing means and in axial alignment with said discharge port;
– second tubing means fixedly secured to said first tubing means; such that the interior passages of said first and second tubing means are in fluid communication with each other;
– means for selectively injecting gaseous fluid under pressure into said second tubing means;
– a plurality of aeration ports selectively located in said first tubing means and communicating with the interior passageway therein for discharging said gaseous fluid into said particulate solids and gas mixture, such an apparatus is known from DE-B-1 262 900 and forms the preamble of the independent claim.

More in particular, this invention relates to pulverized coal discharged to a gasifier for the manufacture of synthesis gas. Conventional coal feed systems using gravity flow of solids, such as in a coal feed to coal-fired boilers, can tolerate major fluctuations in the coal mass flow rate and suspension density.

Various devices have been built for discharging substances which tend to flow easily by gravity, such as grain and coal. While devices such as those disclosed in U.S. Patent Specifications Nos. 3,289,396, 3,367,724, 4,529,336, 3,424,352 and 4,067,623 are concerned with providing "efficient discharge" of particulate materials from bulk storage tanks and avoiding bridging and incomplete discharging from such tanks, these devices do not maintain a uniform mass flow rate of particulate solids and gas mixture discharged in a uniform manner to a receiving reactor.

The present invention is directed to overcoming this problem in the art.

It is remarked that DE-B-1,262,900 discloses an apparatus suitable for maintaining a uniform mass flow rate of particulate solids and gas mixture discharged from a holding vessel.

The aeration means are tubes with aeration ports. Further, second tubing means connected to the first tubing means and a pressured air supply are disclosed.

However, the specific arrangement of the present invention has not been disclosed.

The apparatus of the invention therefore is characterized by reversing means for reversing the flow direction of at least a portion of said gaseous fluid, wherein said reversing means is an upwardly converging hollow cone surrounding a portion of said first tubing means, the upwardly extending walls thereof being selectively perforated and wherein said hollow interior of said cone is in fluid communication with said particulate solids and gas mixture.

The invention will now be described by way of example in more detail by reference to the accompanying drawings, in which:
– Fig. 1 illustrates a coal gasification system employing an embodiment of this invention;
– Fig. 2 is a cross-section of the embodiment taken along line II-II of Fig. 1;
– Fig. 3 is an isometric view of a first advantageous embodiment of the aerating means of the present invention;
– Fig. 4 is an isometric view of a second advantageous embodiment of the present invention; and
– Fig. 5 is an isometric view of another advantageous embodiment of the present invention.

Generation of synthesis gas occurs by partially combusting a carbonaceous fuel, such as coal, at relatively high temperatures in the range of 1000-3000 °C and at a pressure range of from about 1-70 bar, in the presence of oxygen or oxygen-containing gases in a coal gasification reactor, hereinafter referred to as a gasifier. Steam, carbon monoxide, carbon dioxide and oxygen-containing gases including air, oxygen-enriched air, and oxygen are optionally diluted with nitrogen and/or other inert gases.

In the present invention, the fuel and gas mixture is discharged from a feed vessel apparatus, advantageously having multiple outlets, each outlet being in communication with at least one burner associated with the gasifier. Typically, a gasifier will have burners in diametrically opposing positions, but this is not a requirement of this invention. Generally, the burners having their discharge ends positioned to introduce the resulting flame and the agent of combustion into the gasifier.

Of particular importance in the manufacture of synthesis gas is the uniform manner in which the particulate fuel is introduced to the burners within the gasifier. Fluctuations in the mass flow rate of coal being supplied to the burners of the gasifier are detrimental to gasifier's performance. For example, such fluctuations can cause inefficient combustion of fuel within the gasifier and damaging heat fluxes to the burner face which could result in thermal stresses on the burner face. If the mass flow rate of the particulate fuel fluctuates, zones of underheating are generated next to zones of overheating in the gasifier. As a result, in the zones of underheating the fuel is not completely gasified and in zones of overheating the fuel is completely converted into less valuable products, viz. carbon dioxide and water vapour. Additionally, localized high temperatures in the gasifier could damage the refractory lining which is normally arranged at the inner surface of the gasifier wall.

Since the residence time of the coal within the reaction zone of the reactor is approximately 5 seconds or less, the coal mass flow rate should advantageously be constant over periods of this order and advantageously over shorter periods to maintain constant local conditions.

Various factors substantially affect the mass flow rate of the fuel being supplied to the burners. In particular, the discharging of the particulate fuel from a feed vessel apparatus and the transporting by conduit of the fuel from the vessel to the gasifier affect the mass flow rate of fuel to the gasifier. Specifically, fuel and gas mixtures having densities ranging from about 50-800 kg/m³ transported through a conduit having a diameter less than 150 mm or larger experience significant pressure drop due to the summation of various contributions such as frictional losses, restrictions, curvatures, etc., within the conduit.

The present invention utilizes a vessel having downwardly-converging walls at the lower end thereof, the vessel having at least one port at the apex and having an aerating means for aerating the solids within the converging walls of the vessel so as to maintain a uniform mass flow rate of the solids and gas mixture discharged to a gasifier. Gaseous fluids are injected into the aeration means at a selected pressure and rate to maintain a uniform mass flow rate of a particulate solids and gas mixture to be discharged to the receiving gasifier. Furthermore, use of the aerating means as a fluidic valve provides greater flexibility for operating the process under varying conditions, such as different coal types, coal moisture content, etc.

An advantage of the present invention is that maintaining a uniform mass flow rate of a particulate solids and gas mixture to a gasifier prevents the occurrence of zones of underheating and overheating within the gasifier.

A further advantage of the present invention is the protection afforded the refractory lining within the gasifier due to the prevention of zones of underheating and overheating.

An additional advantage of the present invention is more efficient utilization of fuel in the production of synthesis gas.

Another advantage of the present invention is the capability of maintaining high suspension densities, e.g., greater than 200 kg/m³, in the transport line from the vessel to the gasifier thereby reducing the consumption of aeration and pneumatic transport gas and avoiding dilution of the synthesis gas produced in the gasifier which would make the synthesis gas a less valuable product.

Although the invention is described hereinafter primarily with reference to pulverized coal, the method and apparatus according to the invention are also suitable for reactive solids and other finely divided solid fuels which could be partially combusted, such as lignite, anthracite, bituminous, brown coal, soot, petroleum coke, and the like. Advantageously, the size of solid carbonaceous fuel is such that 90 per cent by weight of the fuel has a particle size smaller than 100 mesh (A.S.T.M.).

Additionally, the present invention can be used for both granular, pulverized, and powdered solids such as resins, catalysts, fly ash, bag house and electrostatic precipitator fines.

Having thus generally described the apparatus and method of the present invention, as well as its numerous advantages over the art, the following is a more detailed description thereof, given in accordance with specific reference to the drawings. However, the drawings are of a process flow type in which auxiliary equipment, such as pumps, compressors, cleaning devices, etc. are not shown. All values are merely exemplary or calculated.

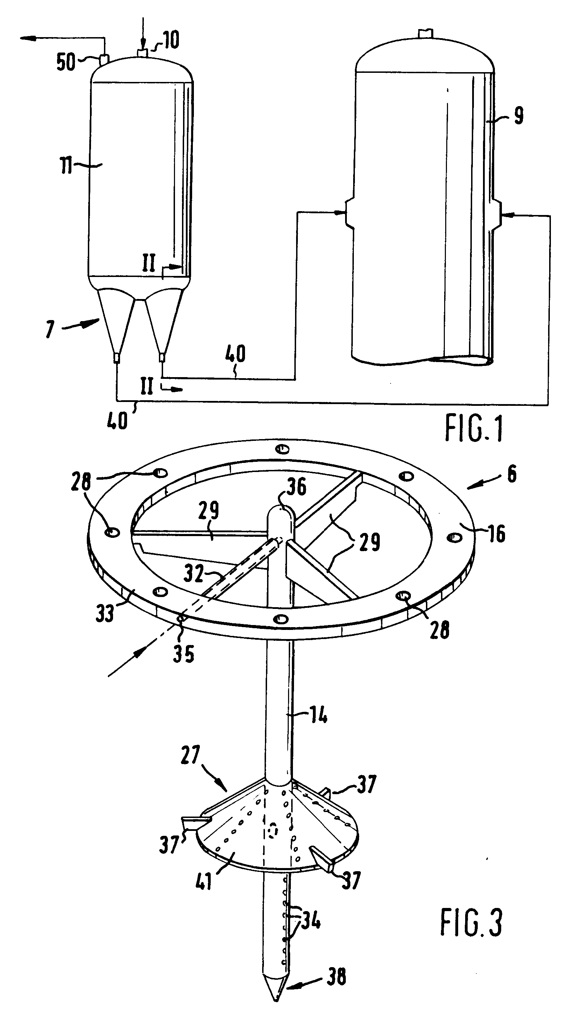

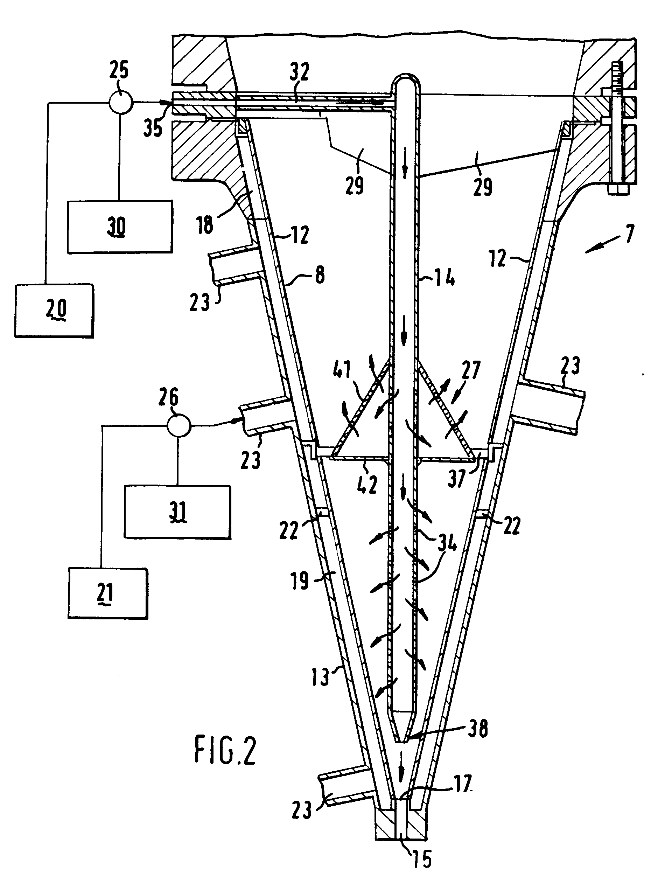

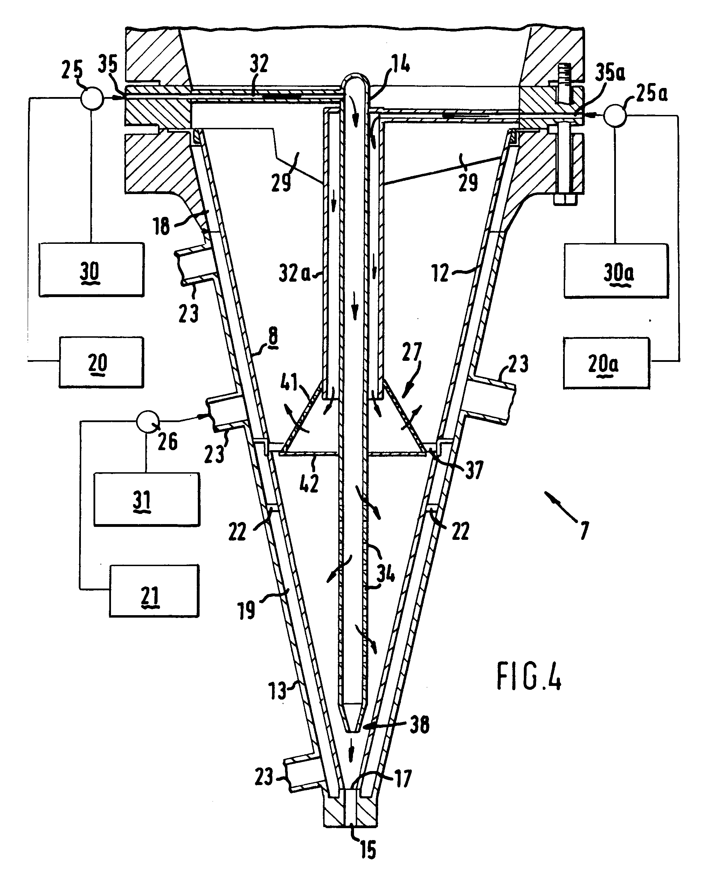

Referring to Fig. 1, an apparatus for maintaining a uniform mass flow rate of a particulate solids and gas mixture discharged from a holding vessel apparatus, such as a feed hopper 11 operated at elevated pressures of 1-70 bar, via a conduit 40 to a receiving reactor, such as a gasifier 9, generally includes means for introducing the mixture, such as an inlet port 10, into the feed hopper 11. The feed hopper 11 directs the material into generally cone-shaped receiving means shown generally at 7 and described more particularly with reference to Figs. 2 and 3.

Referring now to Figs. 2 and 3, an aeration device shown generally at 6 is shown for positioning in the receiving means 7 of the coal gasification system of Fig. 1. The aeration device 6 comprises a hollow shaft or tube 14 supporting a rigidly mounted mounting flange 16 at its upper end and a centering and supporting means 27 rigidly mounted approximately midway between its two ends. The mounting flange 16 has a plurality of holes 28 for mounting to the coal feed hopper 11. The mounting flange 16 is held in place on the aeration shaft 14 by means of gussets 29 which may be welded to the flange 16 and to the hollow shaft 14. A tube 32 extends from the periphery 33 of the flange 16 to the shaft 14 and communicates with the hollow interior thereof. The shaft 14 has a plurality of air-exit holes 34 at the lower end thereof for communication with the coal mixture travelling through the receiving means 7. A gaseous mixture is forced under pressure into the mouth 35 of tube 32. Since the top end 36 of the aeration tube 14 is closed, the gaseous fluid travels down the aeration tube 14 and exits through the holes 34 thereby aerating the coal mixture in the receiving means 7. A centering and supporting means 27 may be welded to the tube 14 and supports a plurality of spacer blocks 37 at its periphery for centering the aeration device 6 in the receiving means 7. It is noted that aeration of the coal (solids) via the aeration tube should not be limited to use of holes. Also porous plugs may be used or even an aeration tube made from sintermetal could serve in the same way. One skilled in the art will know that material selection is related to the process and mechanical requirements.

In its simplest embodiment, the centering means 27 may be comprised of the base plate 42 and spacer blocks 37. In the embodiment of Figs. 2 and 3, the centering means 27 may be a hollow, cone-shaped device whose upward sloping walls 41 are perforated but whose base 42 is solid. The angle of the cone should be less than or equal to 120°. Part of the gaseous aeration fluids in the aeration tube 14 are directed into the interior of the cone 27 and exit through the perforations in the walls 41 thereby further aerating the mixture in the receiving means 7. The embodiment (marked as 27) is not only a centering means. In bunker discharge the use of a centering means as a flow promoting device is known. However, the use of the aerated device claimed herein is novel. The device claimed herein serves to promote a regular flow into the section of the cone below the embodiment (27). The aeration serves to overcome the frictional forces between the cone and the solids and interparticle friction. Moreover, by changing the aeration rate the solids discharge can be changed, serving a fluid valve control aspect.

A further advantageous feature of the invention is shown in Fig. 3. The lower end 38 of the aeration tube 14 may be tapered so as to be receivable into the discharge port 17 of the receiving means 7. The aeration tube 14 may be made to be selectively movable so as to move into (and away from) the port 17 for seating (and unseating) therein. The stinger 38 and port 17 thereby form a fluidic valve for further controlling the flow of material from receiving means 7 and into transport line 40.

The embodiments, as described above, utilize the walls of the receiving means 7 to contain and direct the mixture through the discharge port 17 and into the transport line 40 (vide Fig. 1). It may be necessary, or preferable in some instances, to utilize the aeration tube 14 in combination with a liner 8 within the receiving means 7 wherein the walls 12 of the liner 8 are completely permeable or wherein the walls 12 of the liner 8 use a plurality of porous plugs.

Referring now to Fig. 2, the receiving means 7 may be lined with a liner or inner shell 8 whose walls may be permeable, or porous, the gaseous fluids used for aerating the mixture. The liner 8 has converging walls 12 forming an included angle of less than about 150 degrees, advantageously less than about 90 degrees, and converging toward at least one port 17 formed at the apex thereof for discharging the mixture therefrom.

The receiving means 7 comprises a jacket 13 which surrounds the liner 8 and is mounted to form a substantially enclosed space, or manifold, between the walls 12 of the liner 8 and the jacket 13. The jacket 13 has at least one outlet port 15 at the lower end thereof which is in axial alignment with the discharge port 17 of the liner 8 for discharging particles therefrom.

Means for isolating specific areas, advantageously, first and second areas 18, 19, respectively, located outside and circumferentially about substantially adjacent permeable portions of walls 12, such as a partition 22 within the substantially enclosed space between the jacket 13 and the walls 12, forms at least two substantially enclosed compartments. The jacket 13 includes means for selectively injecting gaseous fluid under pressure into the tube 23 and into first and second areas 18, 19, respectively, such as via the inlet ports 23, 35 from the pressurized fluid sources 20, 21. Although the fluid sources 20, 21 are advantageously separate sources, it is recognized by those skilled in the art that gaseous fluid may be supplied from the same source.

The compartments formed within the substantially enclosed space between the walls 12 and the jacket 13 permit gaseous fluids, possibly having different densities, such as nitrogen or other inert gas and synthesis gas which is mainly carbon monoxide, hydrogen, and water, to be selectively injected into the compartments. The gas injected into the first area 18 may be more, equal, or less dense than the gas injected into second area 19. Advantageously, the gas injected into area 18 would be inert and the gas injected into area 19 would be synthesis gas. The gas injected into area 18 would preferentially flow upwards and could be vented to control the pressure in the feed hopper 11 whereas the gas injected into area 19 flows preferentially downward and is transported to the gasifier 9.

The liner 8 is advantageously made of a heavy, solid material such as stainless steel or alloy 20 and may be lined partially or completely with a porous material which may be metallic or nonmetallic, such as sintered powdered metal, woven stainless steel, or porous ceramic, depending upon the operating conditions and type of coal used in the process. The porous material has a selected permeability. The porous material facilitates the uniform distribution of gaseous fluid injected from the pressurized sources into the liner 8 and prevents bridging of the particulate solids discharged from the liner 8 via discharge port 17.

The pore size of the porous material is based on, among other factors, the type of coal used. To allow greater operating flexibility to use various types of coal requiring differing pore sizes, the liner 8 is advantageously interchangeable with another liner having porous material of a different permeability than the first liner 8.

Furthermore, introduction of the gaseous fluid into the pores of the porous material imparts a pressure restriction to the gaseous fluid thus ensuring an even flow distribution of the fluid throughout the porous material of the walls 12 of the liner 8. Similarly, the porous material serves to control the bulk density of the mixture within the liner 8 and the discharge rate of the mixture leaving the hopper 11 via port 17.

Where the porous material comprises a plurality of plugs, the holes (and plugs) are arranged to provide proper aeration for differing particulate matter and characteristics thereof. For example, the holes of the liner 8 may be arranged in three general zones of openness, a top zone which is 3% open, a middle or bridging zone which is 10% open, and a bottom zone which is 5% open. The entire liner 8 may have approximately 200 holes, the diameter of each being on the order of 14 mm.

The flow rate and direction of the gaseous fluid, preferably nitrogen and synthesis gas, injected under pressure into the aeration tube 32 and into the first and second areas 18, 19, respectively, are controlled, by using the flow controllers, 30, 31, at a rate, measured by the flowmeters 25, 26, sufficient to aerate the particulate solids in proximity to the aeration tube 14 and the porous material of the walls 12, but at a rate below that which would fluidize the particulate solids located above the porous material. It is undesirable to inject the gases at a rate sufficient to fluidize the particles above the porous material, as is typically done in conventional systems, because it results in more inert gas diluting the synthesis gas produced in the gasifier 9 and thus yielding a less valuable product. The flow rate is such that a similar permeability as mentioned for the cone should be used to result in a uniform flow profile over the entire aeration device.

The stinger (14) below the embodiment (27) serves as a diluting device to promote smooth and reliable flow through the cone outlet 17. It may also serve as a means to control the density of the coal in the feedline to the gasifier.

The slip velocity above the aeration cone 8, i.e., the relative superficial velocity between the gas and the coal within the hopper, should be less than 50% of the fluidization velocity and preferably near zero. Also, fluidization of the particles increases fluctuations of the mass flow rate of solids discharged from the coal feed hopper 11.

Additionally, the flow rates of the gaseous fluid from the fluid sources should not exceed the terminal falling velocity of the solids contained within the feed hopper 11. Terminal falling velocity is defined as the velocity at which the drag forces on a solid particle due to the flow of gases upward equals the downward force on the particle due to gravity. If the flow rates of the gases exceed the terminal falling velocity, then the solids will be discharged via the vent 50 rather than the discharge port 17.

Advantageously, the flow rates of these gases from the sources 20, 21 are independently controllable by flow controllers 30, 31 and flow meters 25, 26 which permits the separate control of the amount of gas flowing upward and the amount of gas flowing downward relative to the flow of the coal.

For example, for a uniform mass flow rate of particulate solids and gas mixture of 2000 kg/hr having a suspension density of 450 kg/m$^3$ discharged from the feed hopper 11, the rate of injecting nitrogen in the first area would be approximately 100 kg/hr. Should this rate be exceeded then the suspension density would be less than 450 kg/m$^3$ and the synthesis gas produced in the gasifier 9 would be diluted by the nitrogen from the gas source. Additionally, should this rate be somewhat less than the selected rate, then the suspension density would be substantially higher than 450 kg/m$^3$. Depending on the material and operating conditions, this situation could lead to less than stable flow.

Furthermore, the gaseous fluid may be injected in various directions and elevations to control the pressure and velocity profile which exists at the discharge port 17. Depending on the physical properties of the particles being transported, it may be necessary to have more than two compartments or to inject gas above the compartmented region.

This selective injection provides for separate control of the mixture density within the feed hopper 11 and the discharge density of the mixture leaving the hopper 11 via outlet port 15. As a result, the discharge port 15 of the hopper 11 is much smaller than conventional technologies for suspension densities of 200-500 kg/m$^3$ preferred in the present invention.

The diameter of the discharge port 17 in the present invention is about 4 mm to about 150 mm for a solids and gas mixture having a suspension density of about 200-500 kg/m$^3$. This diameter is larger than the maximum bridging diameter of the aerated particulate solids to prevent bridging of the solids as they exit the discharge port 17. The position of the rod end (38) and cone outlet 17 is chosen such that no blockage of flow occurs. A typical value may be chosen so the clearance of annulus (37) should be at least the same as or larger than the clearance between the inner wall of the jacket and the rod. Conventional coal feed systems using gravity flow of solids assisted by aeration to break up bridging typically have a suspension density of less than 200 kg/m$^3$ at the discharge outlet of the feed hopper and a corresponding feed vessel apparatus discharge port diameter of greater than about 150 mm. Diameters of the discharge port 17 greater than about 150 mm for a given mass flow rate used in the present invention are not desirable because either the velocity or suspension density would fall below the desired limits thus resulting in fluctuations of the mass flow rate of the coal and gas mixture to the gasifier 9.

Additionally, the smaller discharge port 17 diameter of the present invention, in conjunction with the compartmented injection of gaseous fluids, acts like a fluidic valve to control the particulate discharge rate and thereby eliminates the need for troublesome valves in transport hardware between the discharge of the hopper 11 and the gasifier 9.

Furthermore, the present invention may be provided with means for venting gas from the upper end of the hopper 11, say via port 50, for the purpose of maintaining an upward flow of gas through the solids in the feed hopper 11 of approximately 2 mm/sec and thereby eliminate local bridging of the solids and provide smoother flow to the discharge port 17.

The clearance of the annulus between embodiment 27 and the inner liner 8 of the converging jacket is important and should be selected to take into account solids properties (flow behaviour) and wall material.

Referring now to Fig. 4, a second advantageous embodiment of the invention has been shown. The same reference numerals as in Fig. 3 have been used.

A first aeration means comprises the hollow shaft or tube 14 connected to the tube 32. Further, a second aeration means, which may also serve as a centering and supporting means, may be welded to the tube 14 and comprises a tube 32a connected to a mouth 35a. Gaseous aeration fluids are directed into the interior of the cone 27 via the mouth 35a of the second tube 32a and exit through the perforations in the walls 41 thereby substantially reversing fluid flow and further aerating the mixture in the receiving means 7. Thus aeration cone 27 may be used as an independent means of aerating the particulate solids in the receiving means 7. Aeration fluid is supplied in a manner similar to, or the same as, aeration tube 14, i.e., a fluid source 20a controlled by flow controller 30a and measured by flowmeter 25a. The invention claimed herein serves to promote a regular flow into the section of the receiving means 7 below the means 27. Aeration of the particulate solids serves to overcome interparticle friction and the frictional forces between receiving means 7 and the solids. Moreover, by changing the aeration rate the solids discharge can be changed, thereby serving a fluid valve control aspect. Aeration tube 32a may be concentric with aeration tube 14.

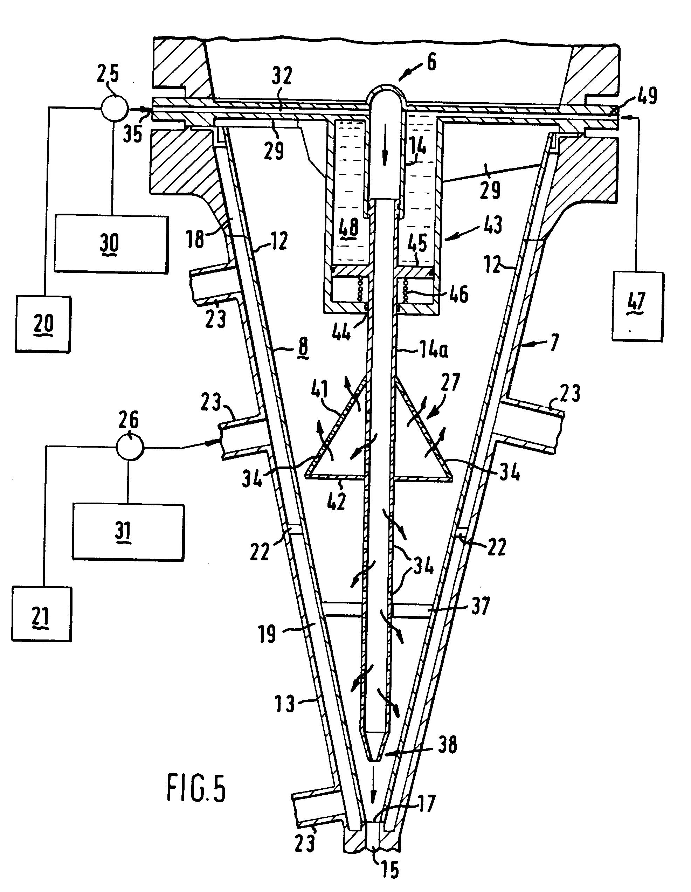

Although the first and second aeration means are shown as being fixed, in some applications it may be desirable that they be movable as shown in Fig. 5 wherein the same reference numerals as in Figs. 3 and 4 have been used.

A shaft 14a is an extension of, and is slideably connected to the shaft 14. The means 27 is welded to the tube 14a, thus rises and falls therewith. Guide means 37 slideably receives aeration shaft 14a for guiding and centering purposes, but does not substantially obstruct the flow of the carbonaceous fuel.

The lower end 38 of aeration tube 14a may be tapered so as to be receivable into the discharge port 17 of the receiving means 7. The aeration tube 14a is made to be selectively movable so as to move into (and away from) the port 17 for seating (and unseating) therein. The stinger 38 and port 17 thereby form a second fluidic valve for further controlling the flow of material from receiving means 7 and into transport line 40.

The aeration tube 14a, and the aeration cone 27 fixedly attached thereto, is movable in its longitudinal direction by means of the hydraulic cylinder generally shown at 43 which may form a part of the mounting flange 16 and gussets 29 (vide Fig. 2). The aeration shaft 14a is slideably received into the hydraulic cylinder 43 through an opening 44 and is fixedly attached, such as by welding, to the piston 45. A portion of the aeration shaft 14a extends above the piston 45 and is slideably (telescopically) received into the tube 14. The piston 45 is biased in its upward position by a spring 46 and its position within the cylinder 43 is controlled by fluid pressure from the hydraulic fluid source 47 into the chamber 48 of the hydraulic cylinder 43 through the inlet port 49. The position of the aeration device 6 is thus controlled by fluid pressure from the source 47. Of course, suitable seal means must be provided at all slideable interfaces as is well known to those skilled in the art.

## Claims

1. An apparatus for maintaining a uniform mass flow rate of particulate solids and gas mixture discharged from a holding vessel apparatus (11) to a receiving reactor (9), comprising means (10) for introducing said mixture into a containing means (7) having downwardly converging walls which form at least one port at the apex thereof for discharging said mixture therefrom; an aeration means (6) positioned in said containing means (7) for aerating said particulate solids and means (17) for discharging said particulate solids from said containing means (7) wherein the aeration means (6) comprises:

   – first tubing means (14) fixedly secured within said containing means (7) and in axial alignment with said discharge port (17);
   – second tubing means (32) fixedly secured to said first tubing means (14); such that the interior passages of said first and second tubing means are in fluid communication with each other;
   – means (20,35) for selectively injecting gaseous fluid under pressure into said second tubing means (32);

– a plurality of aeration ports (34) selectively located in said first tubing means (14) and communicating with the interior passageway therein for discharging said gaseous fluid into said particulate solids and gas mixture, characterized by reversing means (27) for reversing the flow direction of at least a portion of said gaseous fluid, wherein said reversing means (27) is an upwardly converging hollow cone surrounding a portion of said first tubing means (14), the upwardly extending walls (41) thereof being selectively perforated and wherein said hollow interior of said cone is in fluid communication with said particulate solids and gas mixture.

2. The apparatus as claimed in claim 1 characterized in that said aeration means (6) further comprises a third tubing means (32a) fixedly secured to said first tubing means (14); and means (20a,35a) for selectively injecting gaseous fluid under pressure into said third tubing means (32a), wherein the said third tubing means (32a) is in fluid communication with the said hollow interior of said cone.

3. The apparatus as claimed in claim 2 characterized in that said means (20,35; 20a,35a) for injecting said gaseous fluids includes:
    – means (20,35) for injecting a first gaseous fluid having a selected density into said first tubing means (14); and
    – means (20a,35a) for injecting a second gaseous fluid having a density greater than said first gaseous fluid into said third tubing means (32a).

4. The apparatus as claimed in claim 2 characterized in that said means (20,35; 20a,35a) for injecting gaseous fluids includes:
    – means (20,35) for injecting a first gaseous fluid having a selected density into said first tubing means (14); and
    – means (20a,35a) for injecting a second gaseous fluid having a density less than said first gaseous fluid into said third tubing means (32a).

5. The apparatus as claimed in any one of claims 1-4 characterized in that the aeration means (6) comprises:
    – first tubing means (14a) movably secured within said containing means (7) and in axial alignment with said discharge port (17);
    – second tubing means (32,14) slideably connected to said first tubing means (14) such that the interior passages of said first and second tubing means are in fluid communication with each other;

– means (20,35) for selectively injecting gaseous fluid under pressure into said second tubing means (32,14);

– a plurality of aeration ports (34) selectively located in said first tubing means (14a) and communicating with the interior passageway therein for discharging said gaseous fluid into said particulate solids and gas mixture; and

– means (43,44,45,46,47,48,49) for selectively moving said first tubing means (14a) in relation to said discharge port (17).

6. The apparatus as claimed in claim 5 characterized in that said means for selectively moving is a hydraulic cylinder (43).

**Patentansprüche**

1. Vorrichtung zum Aufrechterhalten einer gleichmäßigen Massenflußrate eines Gemisches aus teilchenförmigen Feststoffen und Gas, welches von einer Zwischen- bzw. Haltegefäßvorrichtung (11) an einen aufnehmenden Reaktor (9) abgegeben wird, umfassend eine Einrichtung (10) zum Einführen des Gemisches in eine Aufnahmeeinrichtung (7), die nach unten konvergierende Wände hat, welche an ihrer Spitze wenigstens eine Öffnung bilden zum Abgeben des Gemisches aus ihr, eine Belüftungseinrichtung (6), die in der Aufnahmeeinrichtung (7) angeordnet ist zum Belüften der teilchenförmigen Feststoffe, und eine Einrichtung (17) zum Abgeben der teilchenförmigen Feststoffe von der Aufnahmeeinrichtung (7), wobei die Belüftungseinrichtung (6) umfaßt:
    – eine erste Rohrleitungseinrichtung (14), die in der Aufnahmeeinrichtung (7) sicher befestigt ist und sich in axialer Ausrichtung mit der Abgabeöffnung (17) befindet;
    – eine zweite Rohrleitungseinrichtung (32), die an der ersten Rohrleitungseinrichtung (14) sicher befestigt ist derart, daß die inneren Durchgänge der ersten und der zweiten Rohrleitungseinrichtung sich in Fludiverbindung miteinander befinden;
    – eine Einrichtung (20, 35) zum wahlweisen Injizieren von unter Druck stehendem gasförmigen Fluid in die zweite Rohrleitungseinrichtung (32); und
    – eine Mehrzahl von Belüftungsöffnungen (34), die an ausgewählten Stellen in der ersten Rohrleitungseinrichtung (14) angeordnet sind und mit dem inneren Durchgang darin in Verbindung stehen zum Abgeben des gasförmigen Fluids in das Gemisch aus teilchenförmigen Feststoffen und Gas, **gekennzeichnet** durch

eine Umkehreinrichtung (27), um die Richtung der Strömung wenigstens eines Teiles des gasförmigen Fluids umzukehren, wobei die Umkehreinrichtung (27) ein nach oben konvergierender hohler Kegel ist, der einen Teil der ersten Rohrleitungseinrichtung (14) umgibt und dessen sich nach oben erstreckende Wände (41) an ausgewählten Stellen perforiert sind, wobei das hohle Innere des Kegels sich in Fluidverbindung mit dem Gemisch aus teilchenförmigen Feststoffen und Gas befindet.

2. Vorrichtung nach Anspruch 1, dadurch gekennzeichnet, daß die Belüftungseinrichtung (6) weiterhin eine dritte Rohrleitungseinrichtung (32a), die an der ersten Rohrleitungseinrichtung (14) sicher befestigt ist, und eine Einrichtung (20a,35a) aufweist zum wahlweisen Injizieren von unter Druck stehendem gasförmigen Fluid in die dritte Rohrleitungseinrichtung (32a), wobei die dritte Rohrleitungseinrichtung (32a) sich in Fluidverbindung mit dem hohlen Inneren des Kegels befindet.

3. Vorrichtung nach Anspruch 2, dadurch gekennzeichnet, daß die Einrichtung (20,35; 20,35a) zum Injizieren der gasförmigen Fluide umfaßt:
   – Mittel (20,35) zum Injizieren eines ersten gasförmigen Fluids, welches eine ausgewählte Dichte hat, in die erste Rohrleitungseinrichtung (14);
   – Mittel (20a,35a) zum Injizieren eines zweiten gasförmigen Fluids, welches eine Dichte hat, die größer als die Dichte des ersten gasförmigen Fluids ist, in die dritte Rohrleitungseinrichtung (32a).

4. Vorrichtung nach Anspruch 2, dadurch gekennzeichnet, daß die Einrichtung (20,35; 20a,35a) zum Injizieren von gasförmigen Fluiden umfaßt:
   – Mittel (20,35) zum Injizieren eines ersten gasförmigen Fluids, welches eine ausgewählte Dichte hat, in die erste Rohrleitungseinrichtung (14); und
   – Mittel (20a,35a) zum Injizieren eines zweiten gasförmigen Fluids, welches eine Dichte hat, die geringer als die Dichte des ersten gasförmigen Fluids ist, in die dritte Rohrleitungseinrichtung (32a).

5. Vorrichtung nach irgendeinem der Ansprüche 1 bis 4, dadurch gekennzeichnet, daß die Belüftungseinrichtung (6) umfaßt:
   – eine erste Rohrleitungseinrichtung (14a), die in der Aufnahmeeinrichtung (7) bewegbar befestigt ist und sich in axialer Ausrichtung mit der Abgabeöffnung (17) befindet;
   – eine zweite Rohrleitungseinrichtung (32,14), die mit der ersten Rohrleitungseinrichtung (14) verschiebbar verbunden ist derart, daß die inneren Durchgänge der ersten und der zweiten Rohrleitungseinrichtung sich in Fluidverbindung miteinander befinden;
   – eine Einrichtung (20,35) zum wahlweisen Injizieren von unter Druck stehendem gasförmigen Fluid in die zweite Rohrleitungseinrichtung (32,14);
   – eine Mehrzahl von Belüftungsöffnungen (34), die an ausgewählten Stellen in der ersten Rohrleitungseinrichtung (14a) vorgesehen sind und mit dem inneren Durchgang darin in Verbindung stehen zum Abgeben des gasförmigen Fluids in das Gemisch aus teilchenförmigen Feststoffen und Gas; und
   – Mittel (43,44,45,46,47,48,49) zum wahlweisen Bewegen der ersten Rohrleitungseinrichtung (14a) relativ zu der Abgabeöffnung (17).

6. Vorrichtung nach Anspruch 5, dadurch gekennzeichnet, daß Mittel zum wahlweisen Bewegen einen hydraulischen Zylinder (43) aufweisen.

**Revendications**

1. Un dispositif pour maintenir un débit massique uniforme d'un mélange de solides particulaires et de gaz, d'un appareil de maintien de récipient (11) dans un réacteur de chargement (9), comportant des moyens (10) pour introduire ledit mélange dans un dispositif conteneur (7) présentant des parois convergeant vers le bas, et qui forment au moins un orifice à son sommet pour évacuer ledit mélange ; un dispositif d'aération (6) positionné dans ledit dispositif conteneur (7) afin d'aérer lesdits solides particulaires et des moyens (17) pour évacuer lesdits solides particulaires dudit dispositif conteneur (7), dans lequel les moyens d'aération (6) comprennent :
   – des premiers moyens de conduits (14) fixés solidement dans ledit dispositif conteneur (7) et en alignement axial avec ledit orifice d'évacuation (17) ;
   – des seconds moyens de conduits (32) fixés solidement auxdits premiers moyens de conduits (14) de façon que les passages internes desdits premiers et seconds moyens de conduits soient en communication de fluide l'un avec l'autre ;
   – des moyens (20, 35) pour injecter, de façon sélective, du fluide gazeux sous pression dans lesdits seconds moyens de conduits (32) ;

– une pluralité d'orifices d'aération (34) disposés de façon sélective dans lesdits premiers moyens de conduits (14) et communiquant avec le passage interne desdits moyens afin d'évacuer ledit fluide gazeux dans ledit mélange de solides particulaires et de gaz, caractérisé par des moyens d'inversion (27) pour inverser la direction d'écoulement d'au moins une partie dudit fluide gazeux, dans lequel lesdits moyens d'inversion (27) sont constitués par un cône creux convergeant vers le haut et entourant une partie desdits premiers moyens de conduits (14), les parois s'étendant vers le haut (41) de celui-ci étant perforées, de façon sélective, et dans lequel ledit espace intérieur creux dudit cône est en communication de fluide avec ledit mélange de solides particulaires et de gaz.

2. L'appareil tel que revendiqué dans la revendication 1, caractérisé en ce que lesdits moyens d'aération (6) comportent en outre des troisièmes moyens de conduits (32a) fixés solidement auxdits premiers moyens de conduits (14) ; et des moyens (20a, 35a) pour injecter, de façon sélective, du fluide gazeux sous pression dans lesdits troisièmes moyens de conduits (32a), lesdits troisièmes moyens de conduits (32a) étant en communication de fluide avec ledit espace intérieur creux dudit cône.

3. L'appareil tel que revendiqué dans la revendication 2, caractérisé en ce que lesdits moyens (20, 35 ; 20a, 35a) pour injecter lesdits fluides gazeux comportent :
    – des moyens (20, 35) pour injecter un premier fluide gazeux présentant une densité choisie dans lesdits premiers moyens de conduits (14) ;
    – des moyens (20a, 35a) pour injecter un second fluide gazeux présentant une densité plus élevée que ledit premier fluide gazeux dans lesdits troisièmes moyens de conduits (32a).

4. L'appareil tel que revendiqué dans la revendication 1, caractérisé en ce que lesdits moyens (20, 35 ; 20a, 35a) pour injecter des fluides gazeux comprennent :
    – des moyens (20, 35) pour injecter un premier fluide gazeux présentant une densité choisie dans lesdits premiers moyens de conduits (14) ; et
    – des moyens (20a, 35a) pour injecter un second fluide gazeux présentant une densité inférieure à celle du premier fluide gazeux dans lesdits troisièmes moyens de conduits (32a).

5. L'appareil tel que revendiqué dans l'une quelconque des revendications 1 à 4, caractérisé en ce que les moyens d'aération (6) comprennent :
    – des premiers moyens de conduits (14a) fixés, de façon amovible, à l'intérieur dudit dispositif conteneur (7) et en alignement axial avec ledit orifice d'évacuation (17) ;
    – des seconds moyens de conduits (32, 14) connectés à glissement auxdits premiers moyens de conduits (14) de façon que les passages internes desdits premiers et seconds moyens de conduits soient en communication de fluide l'un avec l'autre ;
    – des moyens (20, 35) pour injecter, de façon sélective, du fluide gazeux sous pression dans lesdits seconds moyens de conduits (32, 14) ;
    – une pluralité d'orifices d'aération (34) disposés sélectivement dans lesdits premiers moyens de conduits (14a) et communiquant avec le passage interne de ceux-ci afin d'évacuer ledit fluide gazeux dans ledit mélange de solides particulaires et de gaz ; et
    – des moyens (43, 44, 45, 46, 47, 48, 49) pour déplacer, de façon sélective, lesdits premiers moyens de conduits (14a) par rapport audit orifice d'évacuation (17).

6. L'appareil tel que revendiqué dans la revendication 5, caractérisé en ce que lesdits moyens pour réaliser le déplacement sélectif est un vérin hydraulique (43).

FIG.1

FIG.3

FIG.2

FIG.4

FIG.5